# EUROPEAN PATENT SPECIFICATION

(11) **EP 3 184 792 B1**
(45) Date of publication and mention of the grant of the patent: **20.11.2019**
(21) Application number: 16199327.4
(22) Date of filing: 17.11.2016
(51) Int. Cl.: F02M 35/16, F02M 35/12, F02M 35/10, B62K 11/04, B62M 7/04

(54) **INTAKE SYSTEM STRUCTURE FOR SADDLE RIDING VEHICLE**
ANSAUGSYSTEMSTRUKTUR FÜR SATTELFAHRZEUG
STRUCTURE DE SYSTÈME D'ADMISSION POUR VÉHICULE À ENFOURCHER

(30) Priority: 25.12.2015 JP 2015253087
(43) Date of publication of application: 28.06.2017
(73) Proprietor: Honda Motor Company Limited, Tokyo 107-8556 (JP)
(72) Inventor: KANDA, Suguru, Wako-shi, Saitama 351-0193 (JP); OKADA, Naoki, Saitama, 351-0193 (JP)
(74) Representative: Herzog, Markus

(56) References cited:
- EP-A2- 1 087 127
- DE-C- 964 550
- JP-B2- 3 620 191
- US-A- 5 116 231
- US-A1- 2009 218 152
- US-A1- 2014 262 572

## Description

### BACKGROUND OF THE INVENTION

### Field of the Invention

The present invention relates to an intake system for a saddle riding vehicle such as a motorcycle or the like.

### Description of Related Art

As an intake system structure for a saddle riding vehicle, a structure in which an intake duct is connected to an air cleaner of an intake system of an engine and an intake resonator configured to reduce intake noises is installed at the intake duct is known (for example, see Japanese Patent No. JP 4 367878 B2).

A saddle riding vehicle according to the preamble of claim 1 is known from EP 1 087 127 A2 or JP 3 620191 B2.

In the intake system structure disclosed in Japanese Patent No. JP 4 367878 B2, an intake duct extending straight toward a front side of a vehicle body is connected to an air cleaner disposed above the engine, and an intake port of a front end portion of the intake duct is opened from a front cowl (a vehicle body cover) toward a front side of the vehicle body. Then, the intake resonator configured to reduce intake noises is connected to a halfway section of the intake duct.

### SUMMARY OF THE INVENTION

However, in the intake system structure disclosed in Japanese Patent No. JP 4 367878 B2, the intake duct extends straight from the air cleaner toward the front side, and the intake resonator is connected to a lower side of the halfway section of the intake duct. For this reason, when the intake system structure disclosed in Japanese Patent No. JP 4 367878 B2 is employed, the intake resonator largely overhangs vertically from the intake duct, and layout of parts avoiding interference with the intake resonator becomes difficult.

An aspect of the present invention is directed to provide an intake system structure for a saddle riding vehicle capable of limiting an overhanging amount of a resonator from above and below of an intake duct in order to make layout of parts around the intake duct easy.

This object is achieved by a saddle riding vehicle according to claim 1.

An aspect of the present invention employs the following configurations in order to solve the above-mentioned problems.
(1) An intake system structure for the saddle riding vehicle according to an aspect of the present invention includes an air cleaner arranged at an upper part of an engine and an intake duct that includes an upstream section and a downstream section connected to the air cleaner and that is configured to introduce external air from a front side of a vehicle body into the air cleaner, wherein an upstream section of the intake duct is attached to a vehicle body cover configured to cover an outside of a front region of a vehicle body frame, an upward curved section curved upward in a protruding shape is formed at the intake duct between the upstream section and the downstream section, and an intake resonator connected to the upward curved section is disposed below the upward curved section of the intake duct.
   According to the above-mentioned configuration, the intake resonator is disposed in a space below the upward curved section of the intake duct, and an overhanging amount of the intake resonator from below the intake duct is suppressed. In addition, since the upward curved section curved upward in a protruding shape is formed between the upstream section and the downstream section of the intake duct, water droplets such as rain water or the like entered the intake duct from the upstream section can be restricted from entering further by an inclined region at a front side of the upward curved section.
   Further, an intake port formed at an upstream section of the intake duct is opened at a position facing an outer side surface of the front fork in a vehicle width direction.
   In this case, when the inside of the vehicle body cover is seen, or the like, the intake port of the intake duct cannot be easily seen due to the front fork. For this reason, the external appearance is improved. In addition, air can be efficiently introduced into the intake duct using wind turning around the outside of the front fork upon travel of the vehicle. Accordingly, according to the configuration, intake performance can be increased.
(2) In the aspect of the above mentioned (1), the intake resonator may be supported by and fixed to front and rear positions bridged over a curved shape of the upward curved section.
   In this case, as the intake resonator is formed to extend over the upward inclined region at the front side and the downward inclined region at the rear side of the upward curved section, the intake resonator can be supported by the intake duct with high stiffness. Accordingly, when this configuration is employed, support stiffness of the intake resonator can be increased, and vibrations of the intake resonator are also suppressed.
(3) In the aspect according to any one of the above mentioned (1) or (2), a labyrinth groove may be formed between the intake port of the upstream section of the intake duct and the vehicle body cover.
   In this case, a seal member interposed between the intake port of the intake duct and the vehicle body cover can be omitted, or the seal member can be simplified. Accordingly, when this configuration is employed, reduction in manufacturing cost can be achieved while introduction of unnecessary air into the vehicle body cover from around the intake port is limited.
(4) In the aspect according to any one of the above mentioned (1) to (3), a downward curved section curved downward in a protruding shape may be formed at the downstream section of the intake duct, and a drain pipe (58) may be formed at a bottom section of the downward curved section (57).
   In this case, even when water droplets such as rain water or the like flow to the downstream section in the intake duct, the water droplets can be discharged to the outside through the drain pipe installed at the bottom section of the downward curved section. Accordingly, the water droplets can be prevented from entering into the air cleaner.
(5) In the aspect of any one of the above mentioned (1) to (4), the intake duct may have a connecting section with respect to the intake resonator at a lower wall corresponding to an apex part of the upward curved section in a curved direction.

In this case, the intake resonator can be effectively utilized at an area in which interference of air intake easily occurs. In addition, influence of the connecting section on a flow of air flowing through the intake duct can be reduced, and water droplets such as rain water or the like entered the intake duct cannot easily flow into the intake resonator.

According to the aspects of the present invention, since the intake resonator is disposed in the space below the upward curved section of the intake duct, the overhanging amount of the intake resonator from below the intake duct can be limited, and layout of parts under the intake duct can be easily achieved. Then, according to the aspects of the present invention, the capacity of the intake resonator can be sufficiently secured to achieve improvement of the intake performance and reduction in intake noise without largely limiting layout of parts under the intake duct.

In addition, according to the aspect of the present invention, the upward curved section curved upward in a protruding shape is formed between the upstream section and the downstream section of the intake duct. For this reason, introduction of water droplets such as rain water or the like entering the intake duct from the upstream section in a direction of the air cleaner can be restricted by an inclined region of a front side of the upward curved section.

### BRIEF DESCRIPTION OF THE DRAWINGS

FIG. 1 is a side view of a saddle riding vehicle according to an embodiment of the present invention.
FIG. 2 is a longitudinal cross-sectional view of an upper portion of an engine of the saddle riding vehicle according to the embodiment of the present invention.
FIG. 3 is a side view of the saddle riding vehicle according to the embodiment of the present invention, from which several parts are removed.
FIG. 4 is a cross-sectional view taken along line IV-IV of FIG 3 of the saddle riding vehicle according to the embodiment of the present invention.
FIG. 5 is a rear view of a side cover of a right side of the embodiment of the present invention.
FIG. 6 is a cross-sectional view of left and right side covers of the embodiment of the present invention corresponding to a cross section taken along line VI-VI of FIG. 5.
FIG. 7 is a cross-sectional view of a connecting portion between an intake resonator and an intake duct of the embodiment of the present invention.
FIG 8 is a side view of the intake duct and the intake resonator of the right side of the embodiment of the present invention.
FIG 9 is a perspective view of the saddle riding vehicle according to the embodiment of the present invention, from which several parts are removed.
FIG. 10 is a perspective view of a lower cowl of a front cowl of the embodiment of the present invention.

### DETAILED DESCRIPTION OF THE INVENTION

Hereinafter, an embodiment of the present invention will be described with reference to the accompanying drawings. Further, directions of forward, rearward, leftward, rightward, and so on, in the following description are the same directions as in a vehicle described below unless the context indicates otherwise.

In addition, in appropriate places of the drawings used in the following description, an arrow FR shows a forward direction with respect to a vehicle, an arrow LH shows a leftward direction with respect to the vehicle, and an arrow UP shows an upward direction with respect to the vehicle.

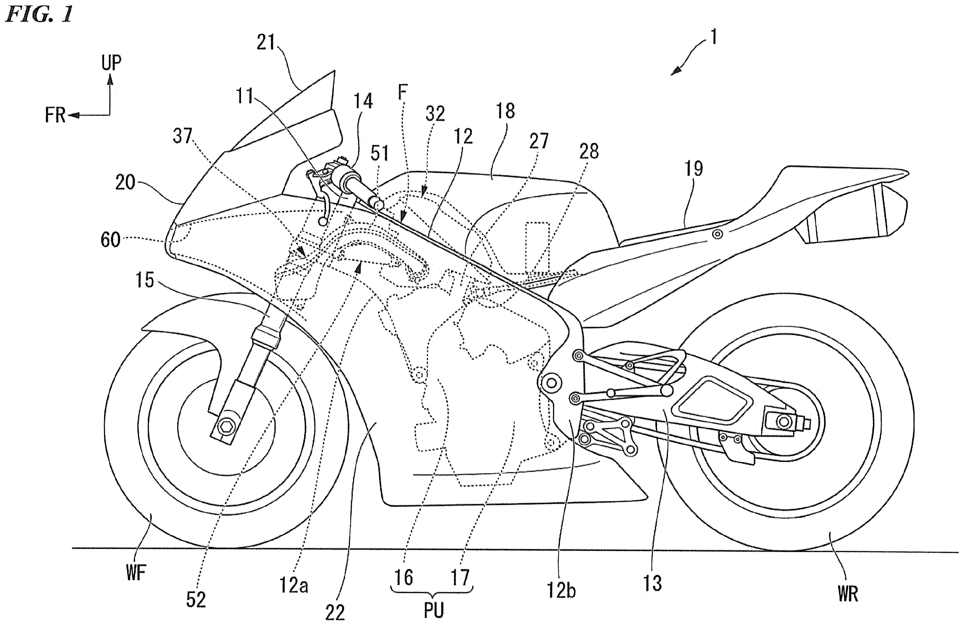

FIG. 1 is a view showing a saddle riding vehicle according to the embodiment when seen from a left side.

The saddle riding vehicle according to the embodiment is a motorcycle having a front wheel WF and a rear wheel WR, and the rear wheel WR is driven by an engine 16. Hereinafter, the saddle riding vehicle according to the embodiment is referred to as "a motorcycle 1."

A vehicle body frame F of the motorcycle 1 includes a head pipe 11 disposed at a front end portion, a pair of left and right main frames 12 extending downward from the head pipe 11 to be inclined rearward and then bent downward, a cross member (not shown) configured to connect the left and right main frames 12, and seat rails (not shown) extending upward from upper ends of rear sections of the left and right main frames 12 to be inclined rearward. Engine hangers 12a extending downward are integrally disposed at the front edge portions of the main frames 12. Swing arms 13 are vertically swingably supported at downward extending portions 12b of rear sections of the left and right main frames 12. The rear wheel WR is rotatably supported at rear sections of the swing arms 13.

A steering system (not shown) is rotatably and axially supported at the head pipe 11.

In the steering system, a steering handle 14 and a pair of left and right front forks 15 are coupled via support members. The front wheel WF is rotatably and axially supported at lower end portions of the left and right front forks 15.

A power unit PU in which the engine 16 and a transmission 17 are configured as an integrated block is attached to the engine hangers 12a and the downward extending portions 12b of the left and right main frames 12. In addition, a fuel tank 18 is attached to upper sides of the left and right main frames 12, and a seat 19 on which a driver sits is attached to seat rails (not shown).

A front cowl 20 formed of a resin and configured to cover the head pipe 11 and a front side of a central region of the steering handle 14 is attached to the head pipe 11 via a stay (not shown). A transparent wind screen 21 is attached to an upper portion of the front cowl 20.

In addition, side cowls 22 (vehicle body covers) formed of a resin and configured to cover a wide range of a side portion of the vehicle body from front sides of the front forks 15 to a rear section of the power unit PU are attached to an outside in a vehicle width direction of the left and right main frames 12. An external air inflow passage 60 opened at a front side of a vehicle is formed under the front cowl 20 between the left and right side cowls 22.

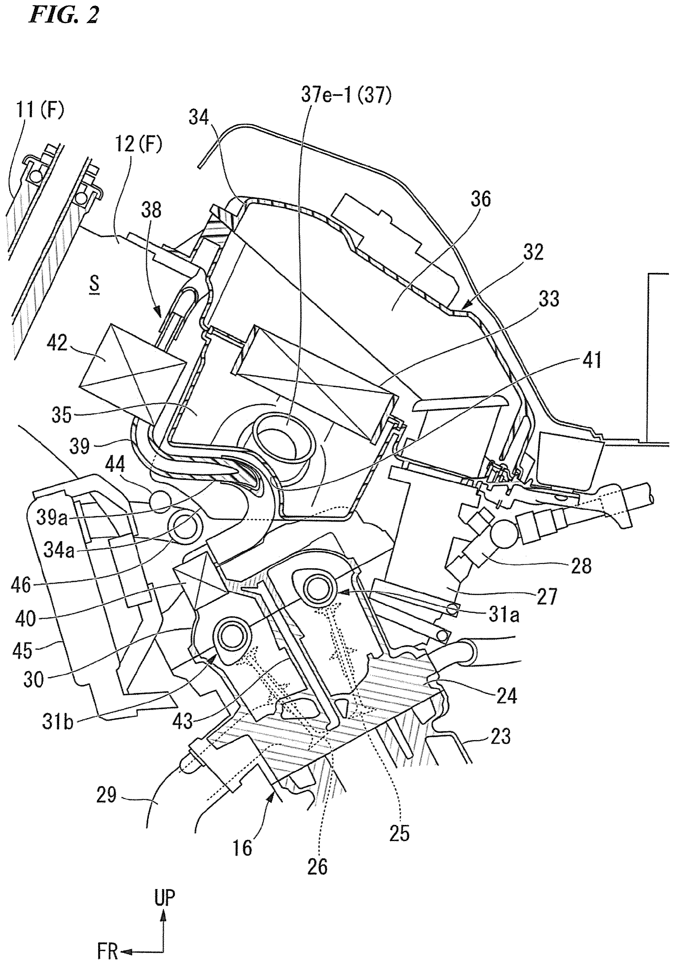

FIG. 2 is a view showing a cross section obtained by cutting an upper region of the engine 16 of the motorcycle 1 using a surface perpendicular to the vehicle width direction.

The engine 16 mounted on the motorcycle 1 is a two-cylinder reciprocating engine, and a cylinder head 24 is attached to an upper portion of a cylinder block 23 in which pistons (not shown) are elevated. Suction ports and exhaust ports (none of which is shown) facing a combustion chamber (not shown) are formed at the cylinder head 24, and the suction ports and the exhaust ports are opened and closed by suction valves 25 and exhaust valves 26.

A throttle body 27 in communication with the suction ports at a downstream side is attached to a rear wall of the cylinder head 24. Injectors 28 configured to inject fuel to an upstream side of the suction ports are connected to the throttle body 27. An exhaust pipe 29 in communication with the exhaust ports at an upstream side is attached to a front wall of the cylinder head 24.

In addition, a head cover 30 is attached to an upper portion of the cylinder head 24. Valve driving mechanisms 31a and 31b configured to elevate the suction valves 25 and the exhaust valves 26 interlocking with the rotation of a crank shaft (not shown) are accommodated between the head cover 30 and the cylinder head 24.

An air cleaner 32 in which air suctioned from the outside is filtered by a filter 33 is disposed above the head cover 30 of the engine 16. The air cleaner 32 is disposed between the left and right main frames 12 and attached to the main frames 12 via a stay or the like (not shown). In the air cleaner 32, the inside of an air cleaner case 34 having a box shape is partitioned into an upstream chamber 35 of a lower side and a downstream chamber 36 of an upper side by the filter 33. Downstream sections 37e-1 of a pair of intake ducts 37 are connected to left and right sidewalls near the front section facing the upstream chamber 35 of the air cleaner case 34. External air introduced from the intake ducts 37 into the upstream chamber 35 is filtered by the filter 33 to be introduced into the downstream chamber 36 of the upper side.

An upstream section of the throttle body 27 is connected to a lower wall near the rear section facing the downstream chamber 36 of the air cleaner case 34. The external air filtered by the filter 33 is supplied into the suction ports of the engine 16 through the throttle body 27.

In addition, a secondary air introduction hose 39 of a secondary air introduction apparatus 38 configured to introduce fresh air into a near portion of the exhaust port in the engine 16 is connected to a front wall facing the downstream chamber 36 of the air cleaner case 34. The secondary air introduction hose 39 is curved in substantially an S shape after extending downward along a front wall of the air cleaner case 34 and is connected to a lead valve 40 installed at an upper portion of the head cover 30 of the engine 16.

A portion of a region of the secondary air introduction hose 39 curved in substantially an S shape is arranged along a groove 41 having a substantially arc-shaped cross section and formed at a lower wall 34a near the front section of the air cleaner case 34. The groove 41 is formed to be recessed at a substantially central portion in the vehicle width direction of the lower wall 34a near the front section of the air cleaner case 34 with an upward protruding shape. A region 39a of the secondary air introduction hose 39 curved in substantially an S shape is curved toward a rear side of the vehicle from a near portion of the lower end of the front wall of the air cleaner case 34 to change a direction toward the front side again, and a front end portion thereof is directed toward a front side of the vehicle to be connected to the lead valve 40. The lead valve 40 is connected to a fresh air introduction pipe 43 installed in the head cover 30. An end portion of the fresh air introduction pipe 43 is opened at a near portion of the exhaust port in the engine 16.

In addition, a control valve 42 configured to control introduction air according to an operation condition of the vehicle is mounted in a halfway section of the secondary air introduction hose 39. The control valve 42 is disposed in a space S surrounded by the front wall of the air cleaner case 34 and the head pipe 11 of the vehicle body frame F.

Further, reference numeral 44 in FIG. 2 designates a cross member configured to connect the left and right main frames 12, reference numeral 45 designates a radiator for cooling an engine, and reference numeral 46 designates a water hose configured to connect the radiator 45 and the engine 16.

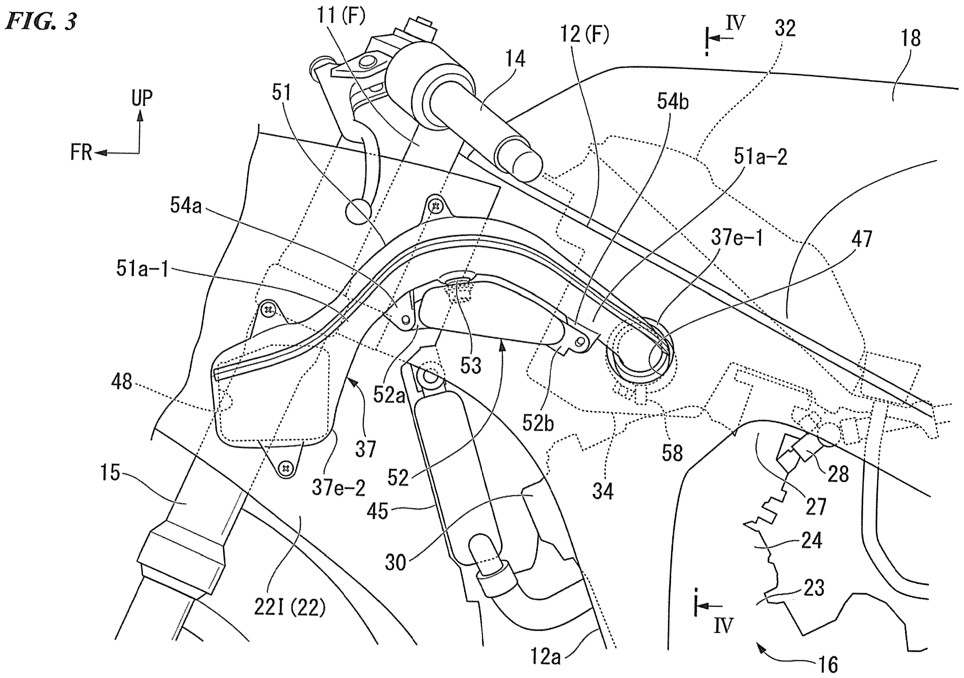

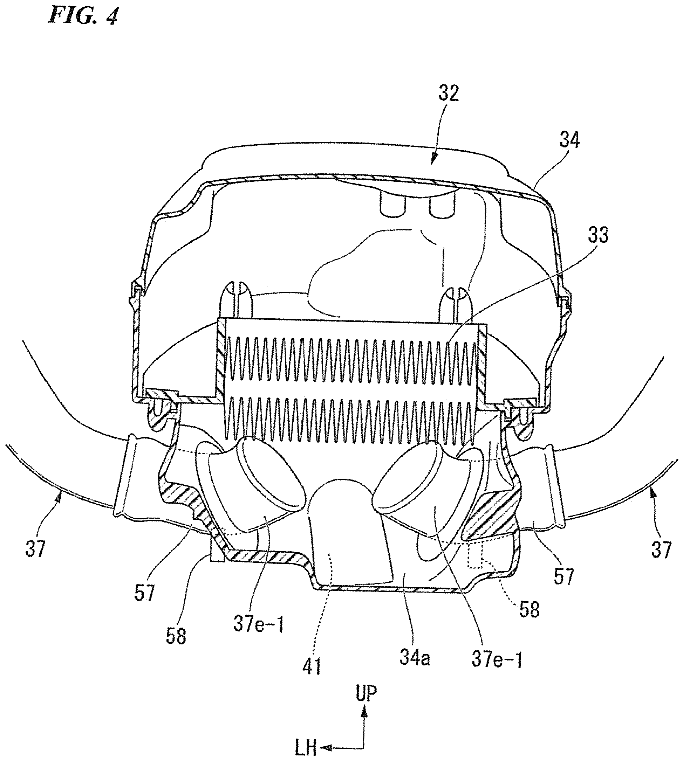

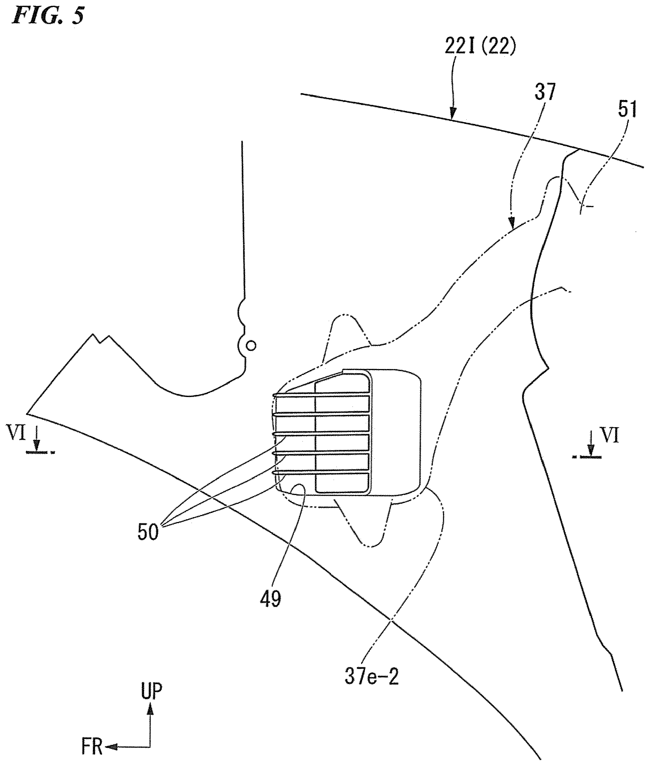

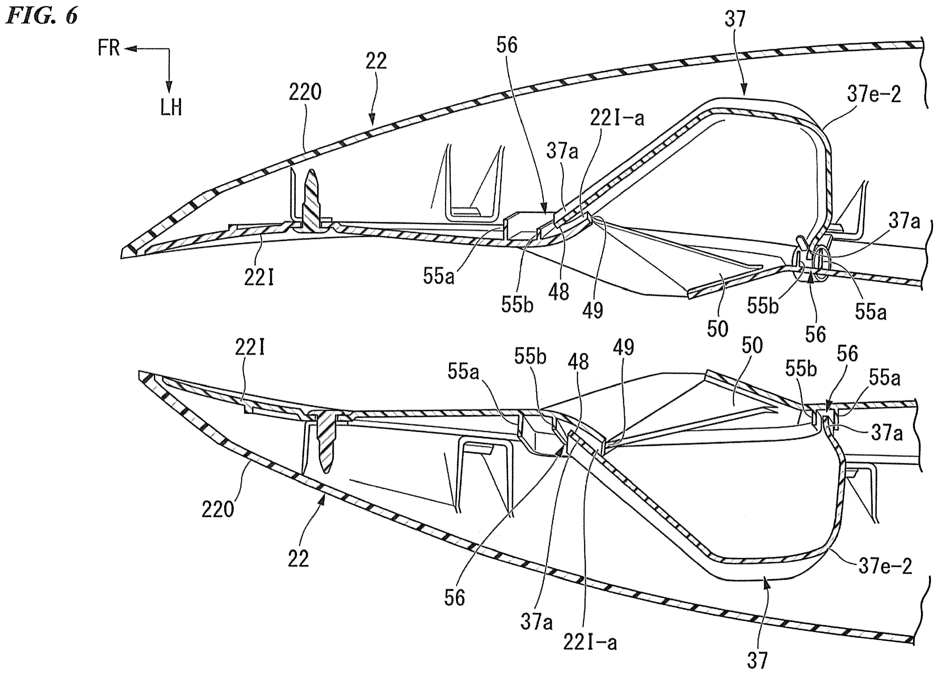

FIG. 3 is a view showing a left side of the motorcycle 1, from which an outer panel 22O (see FIG. 6) of the side cowl 22 is removed. FIG. 4 is a view showing a cross section corresponding to a cross section taken along line IV-IV of FIG. 3, and FIG. 5 is a view showing the side cowl 22 of the right side of the vehicle, when seen from the inside in the vehicle width direction. In addition, FIG. 6 is a view showing cross sections of the left and right side cowls 22 corresponding to a cross section taken along line VI-VI of FIG. 5.

As shown in FIG 6, the left and right side cowls 22 include inner shells 22I fixed to the main frames 12 or the head pipe 11, the engine 16, and so on, and the outer panels 22O attached to the inner shells 22I and configured to cover the outside of the inner shells 22I. A cavity is formed between the inner shells 22I and the outer panels 22O, and a part of the intake ducts 37 are disposed in the cavity.

In each of the left and right intake ducts 37, an intake port 48 configured to suction external air is installed at an upstream section 37e-2, and the downstream section 37e-1 is connected to a sidewall (the upstream chamber 35 in the air cleaner 32) near the lower portion of the air cleaner case 34. The left and right intake ducts 37 are inserted into insertion holes 47 (see FIG 3) formed in the corresponding left and right main frames 12 extending from the sidewalls near the lower portion of the air cleaner case 34 toward the outside in the vehicle width direction.

The intake ducts 37 extending toward the outside of the main frames 12 through the insertion holes 47 are curved to change directions toward the front side of the vehicle, and are arranged along surfaces outside in the vehicle width direction of the inner shells 22I of the side cowls 22. The intake ducts 37 arranged along the surfaces outside in the vehicle width direction of the inner shells 22I are locked to the inner shells 22I at a plurality of places by screws. Then, the intake ports 48 having direction oriented inward in the vehicle width direction and arranged at the end surfaces of the upstream sections 37e-2 of the intake ducts 37 come in communication with the openings 49 arranged at the inner shells 22I. As shown in FIG. 5 and FIG 6, a plurality of blades 50 disposed substantially in a forward/rearward direction of the vehicle body are formed at the openings 49 of the inner shells 22I in parallel in an upward/downward direction.

Further, the openings 49 of the inner shells 22I are formed at positions facing outer side surfaces of the left and right front forks 15. Accordingly, the intake ports 48 of the intake ducts 37 attached to the inner shells 22I are opened at positions of the inner surfaces of the side cowls 22 (vehicle body covers) facing outer side surfaces of the front forks 15.

Incidentally, the intake ducts 37 extending from the insertion holes 47 of the main frames 12 toward the outside in the vehicle width direction are curved upward in a protruding shape at a halfway section without extending straight to the front side of the vehicle toward the intake ports 48 of the upstream sections 37e-2. This portion constitutes upward curved section 51 in the intake duct 37. Intake resonators 52 configured to reduce intake noise upon suction of external air are disposed below the upward curved sections 51 of the intake ducts 37.

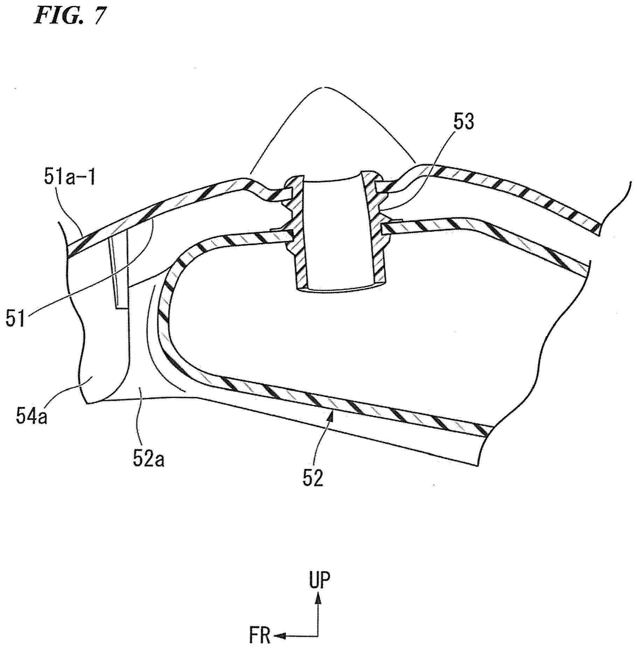

FIG. 7 is an enlarged cross-sectional view of a connecting portion of the intake resonator 52 and the intake duct 37.

In the intake duct 37, a lower wall of the upward curved section 51 corresponding to the apex part in a curved direction is connected to the intake resonator 52 via a connecting pipe 53. In the embodiment, the connecting pipe 53 constitutes a connecting section with respect to the intake resonator 52.

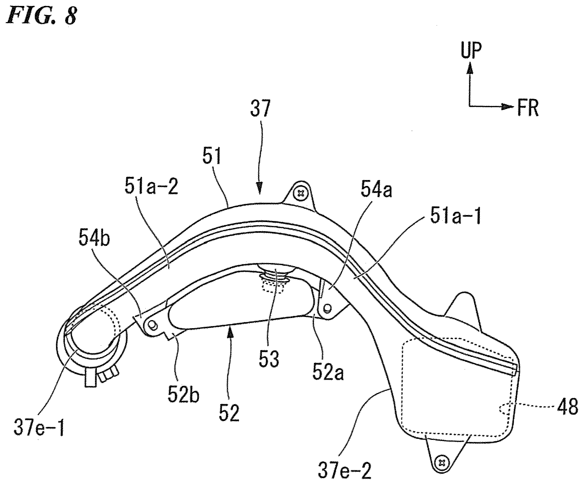

FIG 8 is a view showing the intake duct 37 and the intake resonator 52 disposed at a right side of the vehicle, when seen from the right side of the vehicle.

As shown in FIG. 3 and FIG. 8, brackets 54a and 54b extend downward from an upward inclined region 51a-1 at a front side and a downward inclined region 51a-2 at a rear side of the upward curved sections 51 of the intake ducts 37. Connecting flanges 52a and 52b extending forward and rearward of the intake resonator 52 are fixed to each of the brackets 54a and 54b by clips, screws, or the like. In the case of the embodiment, the connecting flanges 52a and 52b in front of and behind of the intake resonator 52 are fixed such that the connecting flange 52a at the front side overlaps a back surface side of the bracket 54a and the connecting flange 52b at the rear side overlaps a front surface side of the bracket 54b when seen in a side view of the vehicle.

Further, in the case of the embodiment, while the intake ducts 37 disposed at left and right sides of the vehicle are manufactured as different parts at left and right sides because the intake ducts 37 are formed in a laterally symmetrical shape, the intake resonators 52 connected to each of the left and right intake ducts 37 are parts having the same specification commonly used at left and right sides of the vehicle.

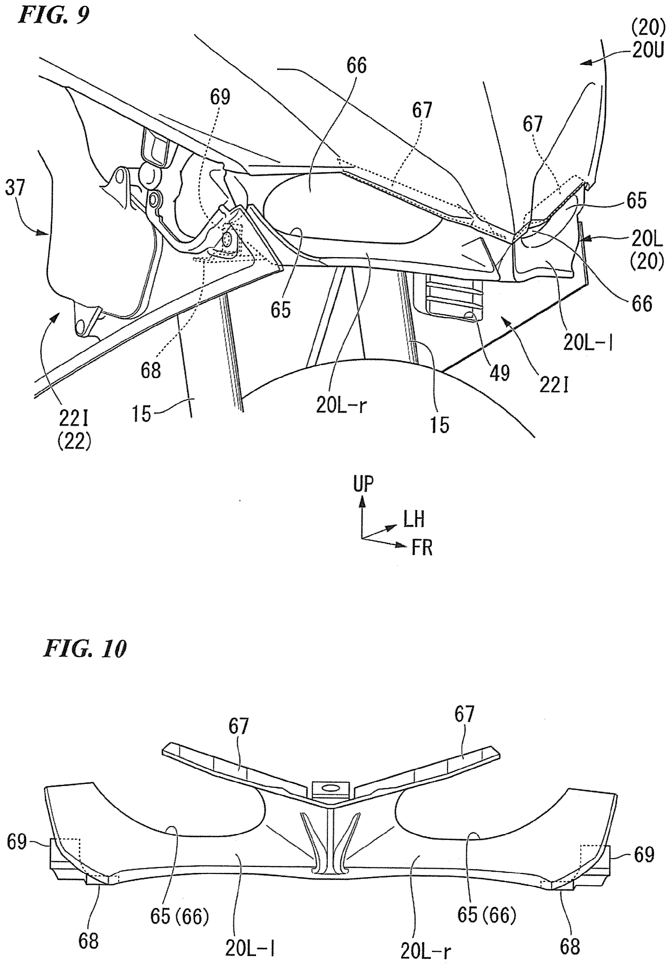

FIG. 9 is a view showing a portion of the front cowl 20 of the motorcycle 1, from which the outer panel 22O of the side cowl 22 is removed, when seen from an upper side of a right front portion.

As shown in FIG. 9, the front cowl 20 includes an upper cowl 20U that is continuous with the wind screen 21 (see FIG. 1), and a lower cowl 20L disposed under a front surface portion of the upper cowl 20U.

FIG 10 is a view showing substantially a front view of the lower cowl 20L.

The lower cowl 20L has a left cover wall 20L-l extending from a center of a front surface thereof toward a left side of the vehicle and a right cover wall 20L-r extending toward a right side of the vehicle, and recessed portions 65 curved and recessed in a laterally elongated oval shape are formed at upper edge portions of the left cover wall 20L-l and the right cover wall 20L-r. Each of the recessed portions 65 forms an opening 66 for air intake between the recessed portion 65 and a lower side of the front surface of the upper cowl 20U when the lower cowl 20L is attached to a lower side of the front surface of the upper cowl 20U as shown in FIG 9. In this way, the two openings 66 formed between the upper cowl 20U and the lower cowl 20L are in communication with the inflow passage 60 (see FIG. 1) of the external air between the left and right side cowls 22. The external air is suctioned into the inflow passage 60 of the external air through the two openings 66.

Flange sections 67 extending leftward and rightward along a lower side of the upper cowl 20U are disposed to extend from an upper region of a center of the front surface of the lower cowl 20L. The left and right flange sections 67 overlap at a lower side of the upper cowl 20U. In addition, a first jointing flange 68 extending in a substantially horizontal direction and a second jointing flange 69 extending in a direction substantially perpendicular to the leftward/rightward direction are disposed to extend from end portions of the left cover wall 20L-l and the right cover wall 20L-r of the lower cowl 20L in the extension direction.

The first jointing flange 68 of the lower cowl 20L is locked to jointing flanges (not shown) disposed at the inner shells 22I corresponding to the left and right side cowls 22 by screws. In addition, the second jointing flange 69 of the lower cowl 20L is locked to inner surfaces of the inner shells 22I corresponding to the left and right side cowls 22 by screws. Accordingly, the front end portions of the inner shells 22I of the left and right side cowls 22 are connected to each other via the lower cowl 20L.

Incidentally, the upstream sections 37e-2 of the left and right intake ducts 37 are fastened and fixed to the inner shells 22I by a plurality of screws in a state in which the intake ports 48 butt against circumferential edge portions of the openings 49 of the inner shells 22I. However, as shown in FIG 6, two shielding walls 55a and 55b protruding outward in the vehicle width direction protrude from the circumferential edge portions of the openings 49 of the inner shells 22I. The two shielding walls 55a and 55b protrude substantially along circumferential areas of the openings 49 and are substantially parallel to each other. In addition, the front edge portions of the openings 49 of the inner shells 22I extend farther rearward than the shielding walls 55b and then are curved outward in the vehicle width direction. The curved portions are referred to as curved pieces 22I-a.

As shown in FIG. 6, circumferential walls 37a of the upstream sections 37e-2 of the intake ducts 37 that form the openings 49 overlap the two shielding walls 55a and 55b of the inner shells 22I side in the vehicle width direction. Specifically, except the front region of the circumferential walls 37a, the circumferential walls 37a are inserted and disposed between the two shielding walls 55a and 55b at a rear region and upper and lower regions of the circumferential walls 37a. The front regions of the circumferential walls 37a are disposed in the vicinity of a root portion of one of the shielding wall 55b along a surface outside in the vehicle width direction of the curved piece 22I-a. In the embodiment, the two shielding walls 55a and 55b and the curved piece 22I-a of the inner shell 22I side, and the circumferential walls 37a of the upstream sections 37e-2 of the intake ducts 37 that overlap them in the vehicle width direction constitute a labyrinth groove 56. The labyrinth groove 56 limits the external air from entering between the outer panel 22O and the inner shell 22I through a gap between the opening 49 of the inner shell 22I and the circumferential wall 37a of the intake duct 37.

As shown in FIG. 2 and FIG. 4, downward curved sections 57 protruding downward in a protruding shape are formed at the downstream sections 37e-1 of the left and right intake ducts 37. A portion of the downstream section 37e-1 of each of the intake ducts 37 further inside in the vehicle width direction than a curved apex part of a lower side of the downward curved section 57 is coupled to a sidewall of the air cleaner case 34 of the air cleaner 32. A region of the downstream section 37e-1 of each of the intake ducts 37 protruding toward the inside of the air cleaner case 34 (the upstream chamber 35) is inclined upward toward a substantially central portion in the vehicle width direction of the air cleaner case 34. A forming portion of the above-mentioned groove 41 protrudes toward an upper side in an arc shape from a substantially central portion in the vehicle width direction of the lower wall 34a of the air cleaner case 34. Accordingly, the external air suctioned into the left and right intake ducts 37 smoothly flows in a direction of the filter 33 in the air cleaner case 34 because the downstream sections 37e-1 of the intake ducts 37 are inclined upward and the external air is guided by a protrusion of the groove forming portion on the lower wall 34a.

In addition, curved apex parts (the lowermost end portions) of the downward curved sections 57 of each of the intake ducts 37 are disposed outside of the left and right sidewalls of the air cleaner case 34, and drain pipes 58 having a predetermined passage length is disposed to protrude from bottom sections of the curved apex parts. When water droplets such as rain water or the like flow into the intake ducts 37, the drain pipes 58 discharge the water droplets to the outside of the intake ducts 37 before they enter the air cleaner case 34.

In the motorcycle 1 according to the embodiment, the external air is supplied into the combustion chamber of the engine 16 as will be described below.

That is, the external air that flows into the inflow passage 60 (see FIG. 1) between the left and right side cowls 22 from the front side of the vehicle flows into each of the left and right intake ducts 37 through the openings 49 formed in the inner shells 221 of the left and right side cowls 22. The external air that flows into each of the intake ducts 37 passes through the upward curved sections 51 at positions outside in the vehicle width direction of the main frames 12, and then passes through the downward curved section 57 at a side portion of a lower side of the air cleaner 32 to flow into the upstream chamber 35 of the air cleaner case 34. In this way, the external air that flows into the upstream chamber 35 flows into the downstream chamber 36 when dust is removed using the filter 33 in the air cleaner case 34, and passes through the throttle body 27 from the downstream chamber 36 to be supplied into the combustion chamber of the engine 16.

In addition, when the control valve 42 of the secondary air introduction apparatus 38 is controlled by a controller (not shown) to be oriented in a valve opening direction during operation of the engine 16, the air in the downstream chamber 36 of the air cleaner 32 is introduced into a near portion of the exhaust port through the secondary air introduction hose 39, the lead valve 40, and the fresh air introduction pipe 43 in the head cover 30 of the engine 16. Accordingly, non-combusted gas in the exhaust gas discharged from the engine 16 is re-combusted and purified.

As described above, in the intake system structure of the motorcycle 1 according to the embodiment, the upstream sections 37e-2 of the intake ducts 37 are attached to the side cowls 22 serving as the vehicle body covers, and the upward curved sections 51 curved upward in a protruding shape are formed between the upstream sections 37e-2 and the downstream sections 37e-1 of the intake ducts 37. Then, the intake resonators 52 connected to the upward curved sections are disposed below the upward curved sections 51 of the intake ducts 37. For this reason, reduction in intake noise in the intake ducts 37 and limitation of interference of air intake can be achieved by the intake resonators 52, and overhanging amounts of the intake resonators 52 from the lower sides of the intake ducts 37 can be reduced. Accordingly, when the intake system structure according to the embodiment is employed, improvement of intake performance and reduction in intake noise can be achieved while facilitating layout of parts below the intake ducts 37.

Further, in the intake system structure according to the embodiment, the upward curved sections 51 curved upward in a protruding shape farther than the intake ports 48 are formed at rear sides of the intake ports 48 of the intake ducts 37. For this reason, when the intake system structure is employed, water droplets such as rain water or the like entering the intake ducts 37 from the intake port 48 can be prevented from entering in a direction of the air cleaner 32.

In addition, in the intake system structure according to the embodiment, the intake ports 48 of the intake ducts 37 are opened at positions facing outer side surfaces of the front forks 15, in the inner surfaces of the inner shells 22I of the side cowls 22. For this reason, when inside regions of the left and right side cowls 22 are seen from above or below the vehicle body, or the like, the intake ports 48 are hidden from the eyes of a person who sees the inside by the front forks 15. Accordingly, when the intake structure is employed, the intake port 48 can easily be hidden from view, improving the external appearance.

Further, in the intake system structure according to the embodiment, since the intake ports 48 of the intake ducts 37 are opened at positions facing the outer side surfaces of the front forks 15, upon travel of the vehicle, wind turning around and flowing outside the front forks 15 can smoothly and easily enter the intake ports 48 of the intake ducts 37 between the left and right side cowls 22. Accordingly, when the intake structure is employed, air can be efficiently inserted into the intake ducts 37 using the wind turning around the outside of the front forks 15 during traveling of the vehicle, and intake performance of the engine 16 can be increased.

In addition, in the intake system structure according to the embodiment, since the connecting flanges 52a and 52b in front of and behind of the intake resonators 52 fix the curved shapes of the upward curved sections 51 of the intake ducts 37 at front and rear positions, the intake resonators 52 can be supported by the intake ducts 37 with high stiffness. In particular, in the case of the embodiment, since the connecting flanges 52a at the front sides of the intake resonators 52 are overlapped and joined to the outer surfaces of the brackets 54a at the front sides of the intake ducts 37 in the vehicle width direction, and the connecting flanges 52b at the rear sides of the intake resonators 52 are overlapped and joined to the inside surfaces of the brackets 54b at the rear sides of the intake ducts 37 in the vehicle width direction, the intake resonator 52 can be supported by the intake ducts 37 with higher stiffness. In addition, according to the structure, vibrations of the intake resonators 52 can be effectively suppressed.

In addition, in the intake system structure according to the embodiment, because the labyrinth grooves 56 are formed between the intake ports 48 of the intake ducts 37 and the circumferential edge portions of the openings 49 of the inner shells 22I, the external air can be limited from passing through gaps between the openings 49 and the circumferential walls 37a of the intake ducts 37 and entering between the outer panels 22O and the inner shells 22I by the labyrinth grooves 56. For this reason, introduction of unnecessary air into the side cowls 22 can be limited without using a seal member. In addition, even when the seal member is used, the structure of the seal member can be simplified. Accordingly, when the intake system structure of the embodiment is employed, a reduction of manufacturing cost can be achieved.

In addition, in the intake system structure according to the embodiment, the downward curved sections 57 curved downward in a protruding shape are formed at the downstream sections 37e-1 of the intake ducts 37 connected to the air cleaner 32, and the drain pipes 58 protrude from the bottom sections of the downward curved sections 57. For this reason, even when water droplets such as rain water or the like entered from the intake ports 48 of the intake ducts 37 flow into the downstream sections 37e-1 of the intake ducts 37, the water droplets can be discharged to the outside through the drain pipes 58 disposed to protrude from the bottom sections of the downward curved sections 57. Accordingly, when the intake system structure is employed, the water droplets can be more securely prevented from entering the air cleaner 32.

Further, in the intake system structure according to the embodiment, the connecting pipes 53 in communication with the intake resonators 52 are connected to the lower walls of the upward curved sections 51 of the intake ducts 37 corresponding to the apex parts in the curved directions.

For this reason, the intake resonators 52 can be effectively utilized at portions in which interference of air intake at the intake ducts 37 easily occurs. In addition, in the intake system structure, since the connecting pipes 53 are connected to the lower walls of the upward curved sections 51 of the intake ducts 37 corresponding to the apex parts in the curved directions, influence of the connecting pipes 53 on a flow of air flowing through the intake ducts 37 can be reduced, and the water droplets entered the intake ducts 37 cannot easily enter the intake resonators 52.

Further, the present invention is not limited to the embodiment but various design changes may be made without departing from the scope of the present invention. For example, while the intake ducts 37 are attached to the inner shells 22I of the side cowls 22 in the embodiment, the intake ducts 37 may be attached to the outer panels 22O of the side cowls 22 or the vehicle body covers other than the side cowls 22.

In addition, the saddle riding vehicle according to the present invention is not limited to the motorcycle (including a motorized bicycle and a scooter type vehicle), and a three-wheeled vehicle (in addition to a one-front-wheeled and two-rear-wheeled vehicle, including also a two-front-wheeled and one-rear-wheeled vehicle) or a four-wheeled vehicle may also be included.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

An intake system structure for a saddle riding vehicle includes an air cleaner (32) and an intake duct (37) including an upstream section (37e-2) and a downstream section (37e-1) connected to the air cleaner (32), and an upstream section (37e-2) of the intake duct (37) is attached to a vehicle body cover configured to cover the outside of a front region of a vehicle body frame (F). An upward curved section (51) curved upward in a protruding shape is formed at the intake duct (37) between the upstream section (37e-2) and the downstream section (37e-1). An intake resonator (52) connected to the upward curved section (51) is disposed below the upward curved section (51) of the intake duct (37).

## Claims

1. A saddle riding vehicle including an engine (16), a vehicle body frame (F), a vehicle body cover (22), an intake resonator (52), a front fork (15) and an intake system structure, the intake system structure comprising:
an air cleaner (32) arranged at an upper part of the engine (16); and
an intake duct (37) that comprises an upstream section (37e-2) and a downstream section (37e-1) connected to the air cleaner (32) and that is configured to introduce external air from a front side of a vehicle body of the saddle riding vehicle into the air cleaner (32),
wherein an upstream section (37e-2) of the intake duct (37) is attached to the vehicle body cover (22) configured to cover an outside of a front region of the vehicle body frame (F),
wherein an upward curved section (51) curved upward in a protruding shape is formed at the intake duct (37) between the upstream section (37e-2) and the downstream section (37e-1), wherein an upward inclined region (51a-1) is formed on a front side of the upward curved section (51) and a downward inclined region (51a-2) is formed at a rear side of the upward curved section, and
wherein the intake resonator (52) connected to the upward curved section (51) is disposed below the upward curved section (51) of the intake duct (37) and is configured to reduce intake noise upon suction of the external air,
the intake duct (37) has a connecting section (53) with respect to the intake resonator (52) at a lower wall corresponding to an apex part of the upward curved section (51) in a curved direction, and **characterized in that**,
the intake resonator (52) is supported by and fixed at front and rear positions bridging over a curved shape of the upward curved section (51) so as to extend over the upward inclined region (51a-1) at the front side and the downward inclined region (51a-2) at the rear side of the upward curved section (51).

2. The saddle riding vehicle according to claim 1,
wherein a labyrinth groove (56) is formed between the intake port (48) of the upstream section (37e-2) of the intake duct (37) and the vehicle body cover (22).

3. The saddle riding vehicle according to claim 1 or 2,
wherein a downward curved section (57) curved downward in a protruding shape is formed at the downstream section (37e-1) of the intake duct (37), and a drain pipe (58) is formed at a bottom section of the downward curved section (57).

## Patentansprüche

1. Sattelfahrt-Fahrzeug umfassend einen Motor (16), einen Fahrzeugkörperrahmen (F), eine Fahrzeugkörperabdeckung (22), einen Einlassresonator (52), eine Vordergabel (15) und eine Einlasssystemstruktur, wobei die Einlasssystemstruktur umfasst:
einen Luftfilter (32), der an einem oberen Teil des Motors (16) angeordnet ist; und
einen Einlasskanal (37), der einen stromaufwärtigen Abschnitt (37e-2) und einen stromabwärtigen Abschnitt (37e-1) umfasst, welcher mit dem Luftfilter (32) verbunden ist und dazu konfiguriert ist, Außenluft von einer Vorderseite eines Fahrzeugkörpers des Sattelfahrt-Fahrzeugs in den Luftfilter (32) einzuleiten,
wobei ein stromaufwärtiger Abschnitt (37e-2) des Einlasskanals (37) an der Fahrzeugkörperabdeckung (22) angebracht ist, welche so konfiguriert ist, dass sie eine Außenseite eines vorderen Bereichs des Fahrzeugkörperrahmens (F) abdeckt,
wobei ein aufwärts gekrümmter Abschnitt (51), der in einer vorstehenden Form aufwärts gekrümmt ist, an dem Einlasskanal (37) zwischen dem stromaufwärtigen Abschnitt (37e-2) und dem stromabwärtigen Abschnitt (37e-1) ausgebildet ist, wobei ein aufwärts geneigter Bereich (51a-1) an einer Vorderseite des aufwärts gekrümmten Abschnitts (51) ausgebildet ist und ein abwärts geneigter Bereich (51a-2) an einer Rückseite des aufwärts gekrümmten Abschnitts ausgebildet ist, und
wobei der Einlassresonator (52), der mit dem aufwärts gekrümmten Abschnitt (51) verbunden ist, unterhalb des aufwärts gekrümmten Abschnitts (51) des Einlasskanals (37) angeordnet und dazu konfiguriert ist, ein Ansauggeräusch beim Ansaugen der Außenluft zu reduzieren,
wobei der Einlasskanal (37) einen Verbindungsabschnitt (53) in Bezug auf den Einlassresonator (52) an einer unteren Wand hat, die einem Scheitelpunkt des aufwärts gekrümmten Abschnitts (51) in einer Krümmungsrichtung entspricht, und
**dadurch gekennzeichnet, dass**
der Einlassresonator (52) an vorderen und hinteren Positionen getragen und befestigt ist, welche eine gekrümmte Form des aufwärts gekrümmten Abschnitts (51) überbrücken, um sich über den aufwärts geneigten Bereich (51a-1) an der Vorderseite und den abwärts geneigten Bereich (51a-2) an der Rückseite des aufwärts gekrümmten Abschnitts (51) zu erstrecken.

2. Sattelfahrt-Fahrzeug nach Anspruch 1,
wobei eine Labyrinthnut (56) zwischen der Einlassöffnung (48) des stromaufwärtigen Abschnitts (37e-2) des Einlasskanals (37) und der Fahrzeugkörperabdeckung (22) ausgebildet ist.

3. Sattelfahrt-Fahrzeug nach Anspruch 1 oder 2,
wobei ein abwärts gekrümmter Abschnitt (57), der in einer vorstehenden Form abwärts gekrümmt ist, an dem stromabwärtigen Abschnitt (37e-1) des Einlasskanals (37) ausgebildet ist, und ein Drainagerohr (58) an einem Bodenabschnitt des abwärts gekrümmten Abschnitts (57) ausgebildet ist.

## Revendications

1. Véhicule à enfourcher incluant un moteur (16), une ossature de carrosserie de véhicule (F), un capot de carrosserie de véhicule (22), un résonateur d'admission (52), une fourche avant (15) et une structure de système d'admission, la structure de système d'admission comprenant :
un filtre à air (32) agencé au niveau d'une partie supérieure du moteur (16) ; et
un conduit d'admission (37), qui comprend une section amont (37e-2) et une section aval (37e-1), raccordé au filtre à air (32) et qui est configuré pour introduire de l'air externe à partir d'un côté avant d'une carrosserie de véhicule du véhicule à enfourcher dans le filtre à air (32),
dans lequel une section amont (37e-2) du conduit d'admission (37) est attachée au capot de carrosserie de véhicule (22) configuré pour couvrir un extérieur d'une région avant de l'ossature de carrosserie de véhicule (F),
dans lequel une section incurvée vers le haut (51) incurvée vers le haut en une forme saillante est formée au niveau du conduit d'admission (37) entre la section amont (37e-2) et la section aval (37e-1), dans lequel une région inclinée vers le haut (51a-1) est formée sur un côté avant de la section incurvée vers le haut (51) et une région inclinée vers le bas (51a-2) est formée au niveau d'un côté arrière de la section incurvée vers le haut, et
dans lequel le résonateur d'admission (52) raccordé à la section incurvée vers le haut (51) est disposé en dessous de la section incurvée vers le haut (51) du conduit d'admission (37) et est configuré pour réduire le bruit d'admission lors de l'aspiration de l'air externe,
le conduit d'admission (37) comporte une section de raccordement (53) par rapport au résonateur d'admission (52) au niveau d'une paroi inférieure correspondant à une partie sommitale de la section incurvée vers le haut (51) dans une direction incurvée, et **caractérisé en ce que**
le résonateur d'admission (52) est supporté par et fixé à des positions avant et arrière formant un pont au-dessus d'une forme incurvée de la section incurvée vers le haut (51) de façon à s'étendre au-dessus de la région inclinée vers le haut (51a-1) au niveau du côté avant et la région inclinée vers le bas (51a-2) au niveau du côté arrière de la section incurvée vers le haut (51).

2. Véhicule à enfourcher selon la revendication 1,
dans lequel une gorge en labyrinthe (56) est formée entre l'orifice d'admission (48) de la section amont (37e-2) du conduit d'admission (37) et le capot de carrosserie de véhicule (22).

3. Véhicule à enfourcher selon la revendication 1 ou 2,
dans lequel une section incurvée vers le bas (57) incurvée vers le bas en une forme saillante est formée au niveau de la section aval (37e-1) du conduit d'admission (37), et un tuyau d'évacuation (58) est formé au niveau d'une section inférieure de la section incurvée vers le bas (57).
